# EUROPÄISCHE PATENTANMELDUNG

(11) **EP 2 206 426 A2**
(43) Veröffentlichungstag der Anmeldung: **14.07.2010**
(21) Anmeldenummer: 10000134.6
(22) Anmeldetag: 08.01.2010
(51) Int. Cl.: A01K 1/00

(54) **Boxenabtrennung**

(30) Priorität: 08.01.2009 DE 202009000200 U
(71) Anmelder: Teipen-Backsmann, Alfons, 49740 Haselünne (DE)
(72) Erfinder: Teipen-Backsmann, Alfons, 49740 Haselünne (DE)
(74) Vertreter: Weeg, Thomas

(57) **Zusammenfassung**

Die vorliegende Erfindung bezieht sich auf eine Boxenabtrennung (2) für Nutzvieh mit einem flexiblen, aus einem Verstärkungsfasern enthaltenden Kunststoffmaterial hergestellten Trennelement (8) und einem im vorderen Bereich der Box angeordneten Nackenriegel (10)

Um die Boxenabtrennungen zu verbessern, wird vorgeschlagen, dass das Trennelement (8) mit dem sich quer über die Breite der Box erstreckenden Nackenriegel (10) und/oder einer den Nackenriegel (10) tragenden Tragvorrichtung (12) verbunden ist und sich zumindest im Wesentlichen in Längsrichtung der Box erstreckt.

## Beschreibung

Die vorliegende Erfindung bezieht sich auf eine Boxenabtrennung für Nutzvieh mit einem flexiblen, aus einem Verstärkungsfasern enthaltenden Kunststoffmaterial hergestellten Trennelement.

Eine gattungsgemäße Boxenabtrennung ist aus der Schrift DE 20 2007 008 820.5 bekannt. Das dort offenbarte Trennelement ist aus einem Kunststoffmaterial hergestellt, das Glasfasern zur Verstärkung enthält. Das Trennelement ist ausreichend flexibel, um bei seitlich angreifenden Kräften ausweichen zu können. Dabei werden jedoch Rückstellkräfte aufgebaut, durch die das Trennelement nach Wegfall der seitlich angreifenden Kräfte wieder in seine Ausgangslage zurück schwingt. Auf diese Weise werden Verletzungen des Nutzviehs, wie beispielsweise Kühen, aber auch Beschädigungen am Trennelement vermieden. Trotzdem reichen die Trennelemente aus, um ein Nutzvieh zumindest annähernd räumlich innerhalb der durch Trennelemente seitlich begrenzten Box zu halten.

Durch die bodennahe Befestigung des Trennelements mit einem Ende ist dieses dort nur beschränkt flexibel. Bei dieser Art der Befestigung ist das Trennelement insbesondere mit seinem der bodennahen Befestigung abgewandten Ende flexibel. Zudem ergibt sich in dem Bereich, in dem das Trennelement bodennah ist, nur eine geringe Abteilungswirkung auf das in der Box eingestellte Nutzvieh.

Es ist die Aufgabe der vorliegenden Erfindung, die bekannte Boxenabtrennung zu verbessern.

Die Aufgabe wird für eine gattungsgemäße Boxenabtrennung gelöst, indem das Trennelement mit dem sich quer über die Breite der Box erstreckenden Nackenriegel und/oder einer den Nackenriegel tragenden Tragvorrichtung verbunden ist und sich zumindest im Wesentlichen in Längsrichtung der Box erstreckt.

Durch die Befestigung des Trennelements am Nackenriegel und/oder an der Tragvorrichtung ergibt sich eine größere Flexibilität, weil das Trennelement bei einer Befestigung am Nackenriegel zusammen mit diesem beweglich ist. Bei einer Befestigung allein an der Tragvorrichtung reicht das Trennelement weiter nach vorn in die Box hinein, da die Tragvorrichtung im Normalfall an der Stirnseite der Box oder sogar dahinter angeordnet ist. Durch die größere Länge des Trennelements ergibt sich über die Länge der Box gesehen ein längerer Abschnitt, in dem das Trennelement flexibel auf Anstöße des Nutzviehs reagieren kann. Die Tragvorrichtung verfügt selbst zusätzlich über ein gewisses Maß an Eigenelastizität, durch die Kraftspitzen elastischer aufgefangen werden können. Die größere Länge des Trennelements, die Beweglichkeit des Nackenriegels und die Nutzung der Eigenflexibilität der Tragvorrichtung ergeben so in der Summe eine größere Flexibilität des Trennelements insbesondere in der vorderen Hälfte einer Box. Die Verbindung der Bauteile miteinander kann nach Wahl jeweils starr oder flexibel erfolgen.

Ein weiterer Vorteil ergibt sich aus der höheren Positionierung des Trennelements im vorderen Bereich der Box. Durch die höhere, nicht so bodennahe Position wird die Trennwirkung des Trennelements auf ein Nutzvieh im vorderen Bereich einer Box erhöht.

Ein weiterer Vorteil ist in der leichten Montage und guten Einstellbarkeit der Boxenabtrennung zu sehen. Da die Tragvorrichtung, der Nackenriegel und das Trennelement gemeinsam die Boxenabtrennung bilden können, kann die räumliche Lage der jeweiligen Bauteile zueinander durch geeignete Verbindungselemente leicht einstellbar gestaltet werden.

Nach einer Ausgestaltung der Erfindung ist der Nackenriegel pendelnd aufgehängt. Die pendelnde Aufhängung kann beispielsweise an Ketten, Drahtseilen, Tauen oder dergleichen mit nicht drucksteifen Aufhängungselementen erfolgen. Bei Anstößen des Nutzviehs am Nackenriegel kann dieser durch die Freiheitsgrade, die die pendelnde Aufhängung bietet, in die Stoßrichtung ausweichen. Die aus der pendelnden Aufhängung resultierenden Freiheitsgrade können insbesondere in seitlicher Richtung und nach oben hin bestehen. Bei einer Verbindung des Trennelements mit dem Nackenriegel würde das Trennelement selbst bei einem Anstoß zusammen mit dem Nackenriegel eine Ausweichbewegung machen. Auch kann ein Anstoß an das Trennelement eine Bewegung des Nackenriegels auslösen. Die Verbindungen können jeweils starr oder flexibel gestaltet sein. Durch den seitlichen Versatz, den die Pendelbewegung des Nackenriegels bei einer Verbindung auf das Trennelement überträgt, wird das Trennelement bereits in seiner räumlichen Lage seitlich verlagert, das Trennelement muss sich infolge dessen nicht so stark verformen, wie es im Falle einer festen Bodenbefestigung erforderlich wäre. Daraus ergibt sich eine insgesamt vergrößerte Beweglichkeit und geringere Belastung des gesamten Boxenabtrennungssystems.

Nach einer Ausgestaltung der Erfindung ist das Trennelement mit einem ersten Ende an der Tragvorrichtung abgestützt. Durch diese Abstützung wird die Längsbeweglichkeit des Trennelements entlang der Längsachse der Box eingeschränkt. In seiner Längslage in Relation zur Box wird das Trennelement durch die Abstützung zumindest annähernd fixiert, je nachdem, wie fest das Trennelement mit der Tragvorrichtung verbunden ist. Ist das Trennelement zusätzlich mit dem Nackenriegel verbunden, ist es möglich, durch die Fixierung des Trennelements in einer bestimmten Längslage gleichzeitig auch den Nackenriegel in einer bestimmten horizontalen Längslage zu positionieren. Ist die Abstützungsposition des Trennelements an der Tragvorrichtung und die Verbindungsstelle des Trennelements mit dem Nackenriegel jeweils einstellbar, ist es möglich, die räumliche Lage des Nackenriegels in der Box sowie die Länge, um die das Trennelement die Box seitlich flankiert, nach Wunsch individuell einzustellen. Die Lage des Nackenriegels und des Trennelements kann auf diese Weise an eine beliebige Größe des in die Box eingestellten Nutzviehs angepasst werden.

Nach einer Ausgestaltung der Erfindung ist das Trennelement an der Abstützung höhenverstellbar befestigbar. Durch die Höhenverstellbarkeit entsteht eine zusätzliche Flexibilität bei den Einstellmöglichkeiten. Ist das Trennelement zusätzlich mit dem Nackenriegel verbunden, fungiert bei einer Höhenverstellung des Trennelements an der Abstützung der Befestigungspunkt zum Nackenriegel als eine Art Drehachse, und die Winkellage, mit der das freie Ende des Trennelements in den Stall ragt, ist auf einen gewünschten Wert einstellbar.

Nach einer Ausgestaltung der Erfindung ist die Abstützung selbst verstellbar. Durch die Verstellbarkeit der räumlichen Lage ist die Boxenabtrennung nochmals vielseitiger verstellbar.

Nach einer Ausgestaltung der Erfindung weist der Nackenriegel eine Ausnehmung auf, durch die das Trennelement hindurch geführt ist. Die Ausnehmung kann beispielsweise rohr- oder hülsenförmig gestaltet sein, so dass sich durch die Form der Ausnehmung eine Führung und gut belastbare Abstützung für das Trennelement ergibt. Punktuell wirkende Belastungen auf das Trennelement werden so vermieden.

Nach einer Ausgestaltung der Erfindung ragt das Trennelement mit einem zweiten Ende frei in den Stallraum hinein. Das frei in den Stall ragende Ende kann sich frei bewegen und flexibel auf Anstöße des Nutzviehs reagieren.

Nach einer Ausgestaltung der Erfindung ist die Tragvorrichtung in eine bodenseitige Haltevorrichtung einsteckbar. Zur Montage der Tragvorrichtung genügt es, diese in die Haltevorrichtung einzustecken, die nach einer bevorzugten Ausgestaltung formschlüssig zur Querschnittsform der Tragvorrichtung gestaltet sein kann. Bei einem Rundrohr als Tragvorrichtung genügt eine Rundaufnahme, die in einem gesonderten Fußteil, aber auch in einem schlichten kreisrunden Loch aus einer Kernbohrung im Betonboden ausgebildet sein kann.

Es wird darauf hingewiesen, dass der in Anspruch 1 definierte Kern der Erfindung auf beliebige Weise mit den vorstehend beschriebenen weiteren Ausgestaltungen der Erfindung einzeln, zu mehreren oder insgesamt mit allen kombinierbar ist.

Weitere vorteilhafte Ausgestaltungen der Erfindung ergeben sich aus den Merkmalen der Unteransprüche, der nachfolgenden gegenständlichen Beschreibung und der Zeichnung.

Die Erfindung wird nachfolgend anhand von Ausführungsbeispielen näher erläutert.

### Es zeigen:

- Fig. 1:: eine Seitenansicht auf eine Boxenabtrennung,
- Fig. 2:: eine Detailansicht einer Befestigungsalternative,
- Fig. 3:: eine Detailansicht einer weiteren Befestigungsalternative.

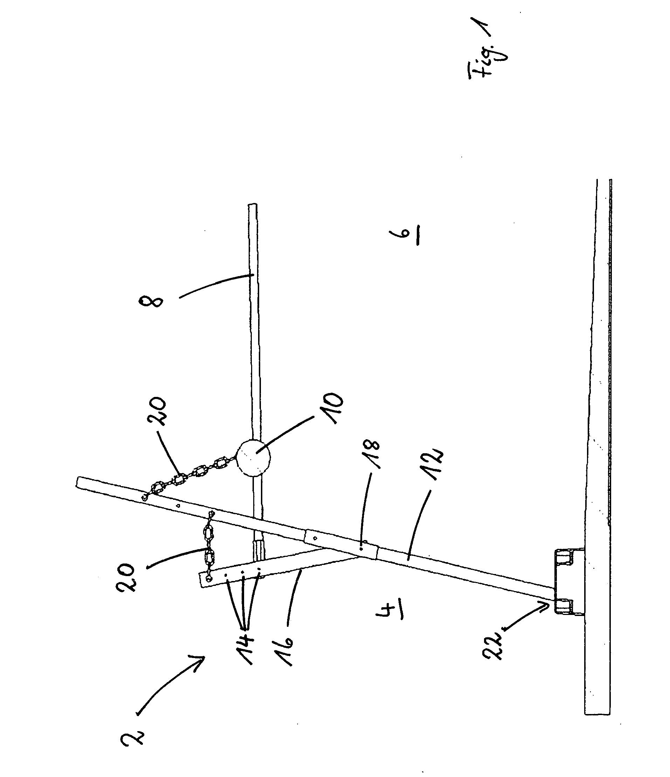

In der beigefügten Fig. 1 ist eine Boxenabtrennung 2 in einer Seitenansicht dargestellt.

Die Box teilt sich auf in einen vorderen Bereich 4 und einen hinteren, der Stallgasse zugewandten Bereich 6. Das Trennelement 8 begrenzt die Box seitlich.

Im gezeigten Ausführungsbeispiel ist das Trennelement 8 mit dem Nackenriegel 10 und der Tragvorrichtung 12 verbunden. Mit dem Nackenriegel 10 ist das Trennelement 8 verbunden, indem es durch eine rohrförmige Ausnehmung im Nackenriegel 10 hindurch gesteckt worden ist.

Mit der Tragvorrichtung 12 ist das Trennelement 8 durch eine Gelenkverbindung 14 an der Gelenkstange 16 verbunden, die ihrerseits gelenkig mit dem Tragrohr 18 gelenkig verbunden ist. Das Trennelement 8 ist so mit einem ersten Ende an der Tragvorrichtung 12 abgestützt, die Gelenkverbindung mit der Gelenkverbindung 16 bildet eine Abstützung.

An ihrem oberen Ende ist die Gelenkstange 16 am Tragrohr 18 über eine Kette 20 gehalten. Je nach Schwenkstellung der Gelenkstange 16 kann diese in einem spitzeren oder flacheren Winkel zum Tragrohr 18 von der Kette gehalten sein, die Gelenkstange 16 ist also verstellbar. Mit ihrer Verstellung verändert sich die Längslage des Trennelements 8 relativ zur Box. Auch der Nackenriegel 10 ist im Ausführungsbeispiel über eine Kette 20 mit der Tragvorrichtung 12 verbunden. Die Ketten 20 erlauben jeweils ein hohes Maß an Flexibilität bei der Einstellung der räumlichen Lage der einzelnen Komponenten zueinander, aber auch im Falle eines Anstoßes von Nutzvieh an die Boxenabtrennung 2. Ist das Trennelement 8 fest mit dem Nackenriegel 10 verbunden, ist es möglich, durch eine Verlagerung der Gelenkstange 16 über das Trennelement 8 auch die räumliche Lage des Nackenriegels 10 zu verändern.

An der Gelenkstange 16 sind mehrere beabstandet zueinander angeordnete Gelenkverbindungen 14 zu erkennen, die eine höhenverstellbare Befestigung des Trennelements 8 an der Tragvorrichtung 12 ermöglichen. Je nach benutzter Gelenkverbindung 14 verändert sich der Anstellwinkel, mit dem das Trennelement 8 in den Stallraum ragt.

Insgesamt ergeben sich durch die beschriebenen vielfältigen Verstellmöglichkeiten viele mögliche Kombinationen der räumlichen Lage des Trennelements 8, des Nackenriegels 10 und der Tragvorrichtung 12 zueinander.

Bodenseitig ist die die Tragvorrichtung 12 in eine Aufnahmeöffnung eingesteckt.

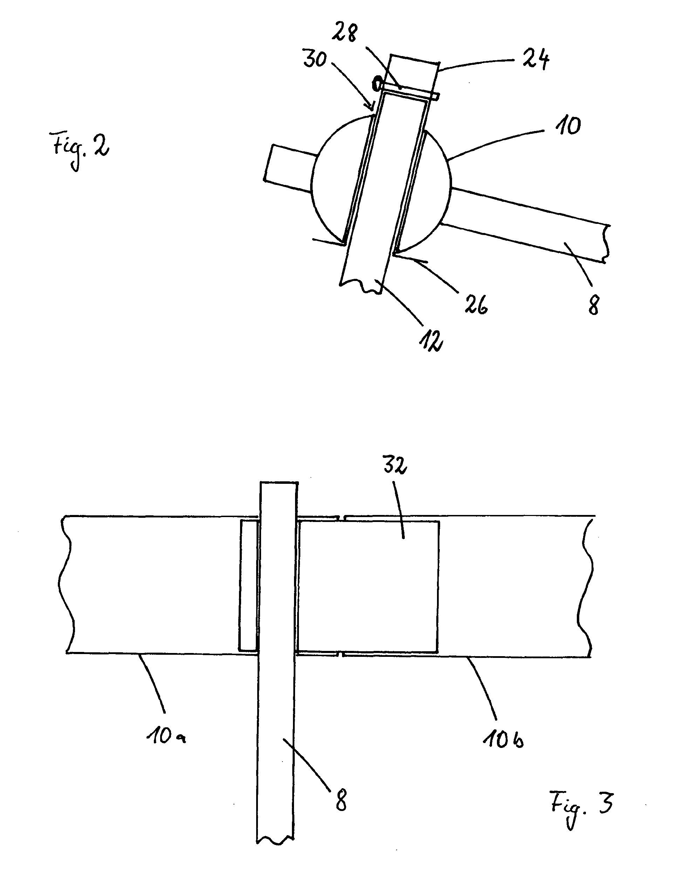

In Fig. 2 ist in einer Querschnittsansicht eine alternative Befestigungsmöglichkeit für einen Nackenriegel 10 an einer Tragvorrichtung 12 gezeigt. Auf die Tragvorrichtung 12 ist ein Aufsatzstück 24 mit einem Haltekragen 26 aufgesetzt. Das Aufsatzstück 24 kann beispielsweise aus einem einfachen Rohr bestehen, das beispielsweise durch eine engestecktes Riegelelement 28 oder einen Anschlag lagefixiert ist. Das Aufsatzstück 24 kann mit verschiedenen beabstandet zueinander angeordneten Löchern zur Aufnahme des Riegelelements 28 versehen sein, um eine unterschiedliche Höheneinstellung zu ermöglichen. Auch die Tragvorrichtung 12 kann mit Löchern versehen sein, in die das Riegelelement 28 zur Festlegung einer Höhenlage des Aufsatzstücks 24 einsteckbar ist.

Der Nackenriegel 10 ist mit einer Ausnehmung 30 versehen, mit der dieser auf das Aufsatzstück 24 aufsetzbar ist. Die Ausnehmung 30 ist eine Öffnung, die beispielsweise als Loch oder Bohrung ausgestaltet und ausreichend groß dimensioniert ist, nach einer bevorzugten Ausgestaltung spielfrei, um ein Aufsetzen zu ermöglichen. Durch sein Eigengewicht wird der Nackenriegel 10 auf dem Haltekragen 26 ruhend gehalten, eine zusätzliche Fixierung ist möglich. Für die Montage einer Boxenabtrennung genügt es also, zunächst die Tragvorrichtungen 12 aufzustellen, sodann die Aufsatzstücke 24 auf die Tragvorrichtungen 12 aufzustecken und sodann die Nackenriegel 10 mit den Ausnehmungen 30 auf die Aufsatzstücke 24 zu stecken. Dies ist schnell und einfach möglich. Sodann können die Trennelemente 8 am Nackenriegel 10 befestigt werden, ebenfalls beispielsweise durch Einstecken in eine dafür im Nackenriegel 10 vorgesehene Öffnung.

Der Nackenriegel 10 kann aus Holz, Metall oder Kunststoff, insbesondere auch einem faserverstärkten Kunststoff, hergestellt sein. Er kann als hohles Rohr oder als massiver Zylinder hergestellt sein. In einem Ausführungsbeispiel ist der Nackenriegel 10 aus einem hohlen Kunststoffrohr hergestellt, das ausreichend schwer ist, um in der Box stehende Tiere unten zu halten, ausreichend fest, um Anstöße von Tieren unbeschadet zu überstehen, und etwas flexibel, um Verletzungen des in der Box befindlichen Tieres zu vermeiden.

In Fig. 3 ist eine Möglichkeit gezeigt, wie Teile des Nackenriegels 10 und des Trennelements 8 miteinander verbunden werden können. Die Rohrstücke10a, 10b, aus denen der Nackenriegel 10 besteht, sind durch ein Kupplungsstück 32 miteinander verbunden, das in Aufnahmeöffnungen an den Rohrstücken 10a, 10b einsteckbar ist. Bei einer formschlüssigen Gestaltung der Form der Rohrstücke 10a, 10b und des Kupplungsstücks 32 können die Bauteile durch einfaches Ineinanderstecken miteinander schnell, dauerhaft und ausreichend fest miteinander verbunden werden. Bei einer entsprechenden Dimensionierung der Bauteile und entsprechenden Öffnungen in den Rohrstücken 10a, 10b und dem Kupplungsstück 32 kann im Verbindungsbereich der Rohrstücke 10a, 10b mit dem Kupplungsstück 32 zusätzlich ein Trennelement 8 lagefixierend mit diesen Bauteilen verbunden sein.

Anstelle einer Befestigung der Tragvorrichtung 12 am Boden kann diese auch an einer Wand oder von einer Decke herab hängend befestigt sein. Für die Befestigung des Trennelements 8 am Nackenriegel 10 oder der Tragvorrichtung 12 hat dies keinen Einfluss.

Die Erfindung ist nicht auf das vorstehend beschriebene Ausführungsbeispiel beschränkt, sondern kann von einem Fachmann auf eine ihm als geeignet erscheinende Weise an einen konkreten Anwendungsfall angepasst werden.

## Patentansprüche

1. Boxenabtrennung (2) für Nutzvieh mit einem flexiblen, aus einem Verstärkungsfasern enthaltenden Kunststoffmaterial hergestellten Trennelement (8) und einem im vorderen Bereich der Box angeordneten Nackenriegel (10), **dadurch gekennzeichnet, dass** das Trennelement (8) mit dem sich quer über die Breite der Box erstreckenden Nackenriegel (10) und/oder einer den Nackenriegel (10) tragenden Tragvorrichtung (12) verbunden ist und sich zumindest im Wesentlichen in Längsrichtung der Box erstreckt.

2. Boxenabtrennung (2) nach Anspruch 1, **dadurch gekennzeichnet, dass** der Nackenriegel (10) pendelnd aufgehängt ist.

3. Boxenabtrennung (2) nach Anspruch 1 oder 2, **dadurch gekennzeichnet, dass** das Trennelement (8) mit einem ersten Ende an der Tragvorrichtung (12) abgestützt ist.

4. Boxenabtrennung (2) nach Anspruch 3, **dadurch gekennzeichnet, dass** das Trennelement (8) an der Abstützung höhenverstellbar befestigbar ist.

5. Boxenabtrennung (2) nach einem der vorher gehenden Ansprüche 3 oder 4, **dadurch gekennzeichnet, dass** die Abstützung selbst verstellbar ist.

6. Boxenabtrennung (2) nach einem der vorher gehenden Ansprüche, **dadurch gekennzeichnet, dass** der Nackenriegel (10) eine Ausnehmung aufweist, durch die das Trennelement (8) hindurch geführt ist.

7. Boxenabtrennung (2) nach einem der vorher gehenden Ansprüche, **dadurch gekennzeichnet, dass** das Trennelement (8) mit einem zweiten Ende frei in den Stallraum hineinragt.

8. Boxenabtrennung (2) nach einem der vorher gehenden Ansprüche, **dadurch gekennzeichnet, dass** die Tragvorrichtung (12) in eine bodenseitige Haltevorrichtung einsteckbar ist.

9. Boxenabtrennung (2) nach einem der vorher gehenden Ansprüche, **dadurch gekennzeichnet, dass** der Nackenriegel (10) über ein Aufsatzstück (24) mit der Tragvorrichtung (12) verbunden ist.

10. Boxenabtrennung (2) nach einem der vorher gehenden Ansprüche, **dadurch gekennzeichnet, dass** der Nackenriegel (10) mit einer Ausnehmung (30) versehen ist, mit der dieser auf das Aufsatzstück (24) aufsetzbar ist.

11. Boxenabtrennung (2) nach einem der vorher gehenden Ansprüche, **dadurch gekennzeichnet, dass** im Verbindungsbereich der Rohrstücke (10a, 10b) mit dem Kupplungsstück (32) zusätzlich ein Trennelement (8) lagefixierend mit diesen Bauteilen verbunden ist.
